Europäisches Patentamt

European Patent Office

Office européen des brevets

(11) Veröffentlichungsnummer: **0 201 046**
**B1**

(12) **EUROPÄISCHE PATENTSCHRIFT**

(45) Veröffentlichungstag der Patentschrift: **18.07.90**

(51) Int. Cl.⁵: **A 01 B 63/14, A 01 B 63/32**

(21) Anmeldenummer: **86105977.2**

(22) Anmeldetag: **30.04.86**

(54) **Arbeitsgerät, insbesondere Bodenbearbeitungsgerät.**

(30) Priorität: **08.05.85 US 731699**

(43) Veröffentlichungstag der Anmeldung:
**12.11.86 Patentblatt 86/46**

(45) Bekanntmachung des Hinweises auf die
Patenterteilung:
**18.07.90 Patentblatt 90/29**

(84) Benannte Vertragsstaaten:
**DE FR GB**

(56) Entgegenhaltungen:
FR-A-2 086 341
FR-A-2 275 980
US-A-3 627 059
US-A-4 335 894
US-A-4 346 763
US-A-4 379 491
US-A-4 506 898

(73) Patentinhaber: **DEERE & COMPANY**
**1 John Deere Road**
**Moline, Illinois 61265 (US)**

(72) Erfinder: **Burk, Ronnie Franklin**
**4562 Hoff Road**
**Waterloo Iowa 50704 (US)**
Erfinder: **Delfs, Larry Marvin**
**1348 Clark Drive**
**Cedar Falls Iowa 50613 (US)**
Erfinder: **Gilmore, Michael Robert**
**4840 Jersey Ridge Road Apt. 20E**
**Davenport Iowa 52807 (US)**
Erfinder: **Thompson, Warren Lynn**
**119 Rustic Lake Drive**
**Colona Illinois 61241 (US)**

(74) Vertreter: **Feldmann, Bernhard et al**
**DEERE & COMPANY European Office, Patent**
**Department Steubenstrasse 36-42 Postfach 503**
**D-6800 Mannheim 1 (DE)**

Courier Press, Leamington Spa, England.

**Beschreibung**

Die Erfindung bezieht sich auf ein Arbeitsgerät, insbesondere Bodenbearbeitungsgerät, mit einem ersten Rahmenteil und mindestens einem zweiten Rahmenteil, die über einen an beiden Rahmenteilen angreifenden, doppelseitig beaufschlagbaren Hydraulikzylinder mit zwei Druckräumen derart verschwenkbar sind, daß der zweite Rahmenteil bei Beaufschlagung des ersten Druckraumes in eine Arbeitsstellung und bei Beaufschlagung des zweiten Druckraumes in eine Transportstellung verstellbar ist, wozu der erste und zweite Druckraum über je eine Leitung an ein Steuerventil angeschlossen sind, über das der erste Druckraum mit einer Pumpe und der zweite Druckraum mit einem Sammelbehälter oder der zweite Druckraum mit der Pumpe und der erste Druckraum mit dem Sammelbehälter verbindbar sind.

In der Landwirtschaft werden diese Arbeitsgeräte als Bodenbearbeitungsgeräte, wie Scheibeneggen, eingesetzt, und mit steigender kW-Leistung der diese Geräte ziehenden Ackerschlepper wird die Breite immer größer, so daß die Breite für Fahrten auf öffentlichen Straßen auf die vom Gesetzgeber maximal zugelassene reduziert werden muß. Aber auch in Ländern, wo diese Auflagen nicht bestehen, oder in Gebieten, wo auf öffentlichen Straßen nicht gefahren wird, muß die Breite reduziert werden, da sonst Toreinfahrten und dergleichen nicht passiert werden könnten. Deshalb werden solche überbreiten Geräte derart ausgebildet, daß einem mittleren Rahmenteil seitlich weitere Rahmenteile angelenkt sind, die zu Transportfahrten eingeklappt und im Arbeitseinsatz ausgeschwenkt sind. Das Ein- und Ausklappen erfolgt über Hydraulikzylinder, die je nach Ausbildung des Steuerventils im Arbeitseinsatz eine Schwimmstellung einnehmen können, das heißt bei ausgeschwenkten Rahmenteilen steht am Kolben des Hydraulikzylinders kein Druck an. Dies bewirkt, daß die Rahmenteile im Arbeitseinsatz um ihre Gelenkstellen schwenken können und damit in schweren bzw. lehmigen Böden oder in leichten bzw. sandigen Böden unterschiedlich tief eindringen. Dies ist unerwünscht, und Abhilfe wurde dadurch geschaffen, daß die Rahmenteile mit Ballastgewichten versehen wurden bzw. die Rahmenteile tragenden Laufräder in ihrer Höhe verstellbar ausgebildet wurden. Andererseits ist es aber je nach Ausbildung der Hydraulikanlage möglich, daß auch in der Arbeitsstellung der Rahmenteile an dem Kolben des oder der Hydraulikzylinder noch der Druck ansteht, der zum Verschwenken aus der Transport- in die Arbeitsstellung erforderlich war. Dadurch wird die Gelenkverbindung zwischen den Rahmenteilen so lange starr, wie der von den Arbeitswerkzeugen kommende Gegendruck den Druck am Hydraulikzylinder nicht überwinden kann. Die Folge davon ist, daß die Schwenkachse, um die das Arbeitsgerät bei unterschiedlichen Bodenverhältnissen sich seitlich bewegt, verlagert wird, so daß sich wiederum unterschiedliche Eindringtiefen der Arbeitswerkzeuge ergeben.

Bei dem gattungsmäßig berücksichtigten Arbeitsgerät (US-A-4 379 491) ist an einem mittleren Rahmenteil seitlich je ein Rahmenteil angeordnet, und das Verschwenken erfolgt über zwei doppelseitig beaufschlagbare Hydraulikzylinder, wobei die Arbeitstiefe über Hydraulikzylinder an den Laufrädern und einem zwischen Zugdeichsel und mittleren Rahmenteil wirkenden Längszylinder gesteuert wird. Eine Aussage, wie die Hydraulikzylinder zum Verschwenken der Rahmenteile in Transport- und Arbeitsstellung im Arbeitseinsatz beaufschlagt werden, findet sich in diesem Dokument nicht.

Die mit der Erfindung zu lösende Aufgabe wird darin gesehen, bei einem Arbeitsgerät mit wenigstens einem über einen Hydraulikzylinder verschwenkbaren Rahmenteil die Hydraulikanlage derart auszubilden, daß über die Hydraulikzylinder die Eindringtiefe der Arbeitswerkzeuge steuerbar ist. Diese Aufgabe ist dadurch gelöst, daß in wenigstens einer zu einem Druckraum führenden Leitung ein erstes Drucksteuerventil vorgesehen und dieser Druckraum in der Arbeitsstellung des zweiten Rahmenteils von der Pumpe mit einem reduzierten Druck beaufschlagbar ist. Auf diese Weise ist die Hydraulikanlage sensibler ausgebildet, da der bodenwärts gerichteten Kraft des angelenkten Rahmenteils, die durch das Gewicht des Rahmenteils und der Ausbildung und Eindringtiefe der Arbeitswerkzeuge hervorgerufen wird, entgegengewirkt wird, so daß man von einer Gewichtsverlagerung sprechen kann, die je nach Einstellung des Drucksteuersystems eine mehr oder weniger tiefe Eindringtiefe bewirkt und den Rahmenteil eher um seine Anlenkstelle pendeln läßt. Dies gilt insbesondere dann, wenn die Arbeitswerkzeuge auf harte Widerstände auftreffen, die bei herkömmlichen Anlagen ein Ausheben des gesamten Arbeitsgerätes bewirken können.

Andererseits ist es nach der Erfindung auch möglich, daß in der zu dem anderen Druckraum des Hydraulikzylinders führenden Leitung ein zweites Drucksteuerventil vorgesehen ist, über das dieser Druckraum in der Arbeitsstellung des zweiten Rahmenteils von der Pumpe mit einem reduzierten Druck beaufschlagbar ist, wodurch die bodenwärts gerichtete Kraft des angelenkten Rahmenteils ebenfalls steuerbar ist.

Nach einem weiteren erfindungsgemäßen Vorschlag kann das Drucksteuerventil manuell einstellbar und als Druckreduzierventil ausgebildet sein. Hierdurch lassen sich in besonders einfacher Weise die an dem Kolben des Hydraulikzylinders anstehenden Drücke über vorherbestimmbare Bereiche steuern bzw. einstellen.

Als besonders vorteilhaft wird nach der Erfindung angesehen, daß das erste Drucksteuerventil überbrückbar ist. Dies gibt der Bedienungsperson grundsätzlich die Möglichkeit, daß beispielsweise beim Verschwenken des Rahmenteils in seine Transportstellung das Drucksteuerventil nicht auf seinen Maximaldruck verstellt werden muß. Die Einstellung am Drucksteuerventil kann verbleiben, und es braucht lediglich das Steuerventil betätigt zu werden.

Zweckmäßig ist das Drucksteuerventil als Überdruckventil ausgebildet.

In einfacher Weise läßt sich das erste Drucksteuerventil leicht dadurch überbrücken, daß in der zu dem zweiten Druckraum des Hydraulikzylinders führenden Leitung ein Zweiwegeventil vorgesehen ist, das aus seiner das erste Drucksteuerventil mit dem zweiten Druckraum verbindenden Stellung in eine zweite Stellung verstellbar ist, in der die Verbindung vom ersten Drucksteuerventil zum zweiten Druckraum unterbrochen und in der zweite Druckraum über eine Bypassleitung an das Steuerventil angeschlossen ist, über das die Bypassleitung wahlweise an die Pumpe oder an den Sammelbehälter anschließbar ist, wobei das erste Drucksteuerventil an die zum ersten Druckraum führende Leitung angeschlossen ist. Damit kann zum Verschwenken des Rahmenteils in die Arbeitsstellung das Steuerventil eine Stellung einnehmen, in der die Bypassleitung mit dem Sammelbehälter verbunden ist, wobei sich das Zweiwegeventil in seiner zweiten Stellung befindet. Wird dann in der Arbeitsstellung das Zweiwegeventil in seine erste Stellung verschoben, so wird bei gleicher Einstellung des Steuerventils auch der zweite Druckraum druckbeaufschlagt, so daß an beiden Seiten des Kolbens im Hydraulikzylinder ein Druck ansteht, wobei die Drücke unterschiedlich je nach Einstellung zumindest des ersten Drucksteuerventils sind. Wird die Bypassleitung mit der Pumpe verbunden und das Zweiwegeventil in seine zweite Stellung zurückgeführt, so kann wieder unter Umgehung des ersten Drucksteuerventils der angelenkte Rahmenteil in seine Transportstellung verschwenkt werden.

Eine automatische Verstellung des Zweiwegeventils wird erfindungsgemäß dadurch erreicht, daß das Zweiwegeventil an seinen Enden je einen Pilotraum aufweist und unter der Wirkung einer Feder steht, die bestrebt ist, das Zweiwegeventil in seine zweite Stellung zu verstellen, wobei die Bypassleitung an den Pilotraum mit der Feder und der andere Pilotraum an die zum ersten Druckraum führende Leitung angeschlossen ist, wobei in der Bypassleitung ein Dreistellungsventil vorgesehen ist, das beidenends unter der Wirkung je einer Feder steht und dort Piloträume aufweist, wobei ein Pilotraum stromabwärts des Dreistellungsventils und der andere Pilotraum stromaufwärts des Dreistellungsventils an die Bypassleitung angeschlossen ist und das Dreistellungsventil aus einer Mittenstellung, in der der Durchfluß gedrosselt ist, in eine erste Endstellung, in der der Durchfluß ungedrosselt ist, oder in die andere Endstellung verstellbar ist, in der ein gedrosselter Durchfluß möglich ist und zusätzlich ein Anschluß der Verbindung des einen Pilotraums des Zweiwegeventils an die zum ersten Druckraum führende Leitung an die Bypassleitung gegeben ist, der in der Mittenstellung und in der ersten Endstellung des Dreistellungsventils unterbrochen ist. Durch die Drossel im Dreistellungsventil wird ein Differenzdruck erzeugt, der das selbsttätige Verstellen des Dreistellungsventils aus seiner Mittenstellung bewirkt.

Dadurch, daß erfindungsgemäß in der Verbindung des einen Pilotraumes des Zweiwegeventils an die zum ersten Druckraum führende Leitung eine Drossel und ein Rückschlagventil vorgesehen sind, das einen Druckmittelfluß von der zum ersten Druckraum führenden Leitung zum Pilotraum gestattet und in umgekehrter Richtung verhindert, werden Rückflüsse aus der Bypassleitung vermieden, wobei die Drossel so klein ist, daß Druckflüssigkeit den Hydraulikzylinder umgehen könnte.

Schließlich kann nach der Erfindung jedes Drucksteuerventil aus seiner einen Endstellung, in der der Zu- und Rückfluß in bzw. aus dem entsprechenden Druckraum möglich ist, in eine zweite Endstellung entgegen der Wirkung einer Feder verstellbar sein, in der der entsprechende Druckraum mit dem Sammelbehälter verbunden ist, wobei die maximal einstellbaren Werte der Drucksteuerventile unterschiedlich sind.

Im folgenden wird die Erfindung anhand von zwei Ausführungswege darstellenden Zeichnungen näher erläutert. Es zeigt:

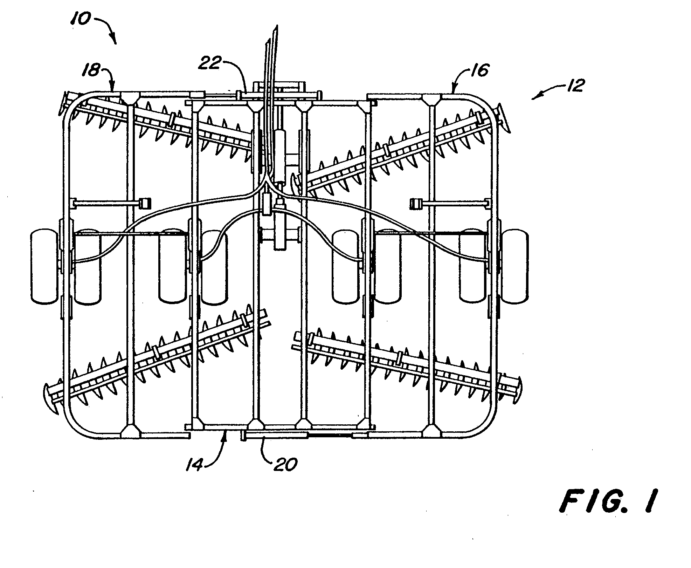

Fig. 1 ein Bodenbearbeitungsgerät in der Draufsicht und

Fig. 2 und 3 zwei verschiedene Schaltkreise einer hydraulischen Stellvorrichtung.

In der Zeichnung ist mit 10 ein Bodenbearbeitungsgerät in Form einer Scheibenegge bezeichnet, die aus einem dreiteiligen Rahmen 12 besteht, der einen mittleren Rahmenteil 14 und zwei vertikal schwenkbar angeschlossene Rahmenteile 16 und 18 aufweist. Zum Verschwenken sind zwei Hydraulikzylinder 20 und 22 vorgesehen.

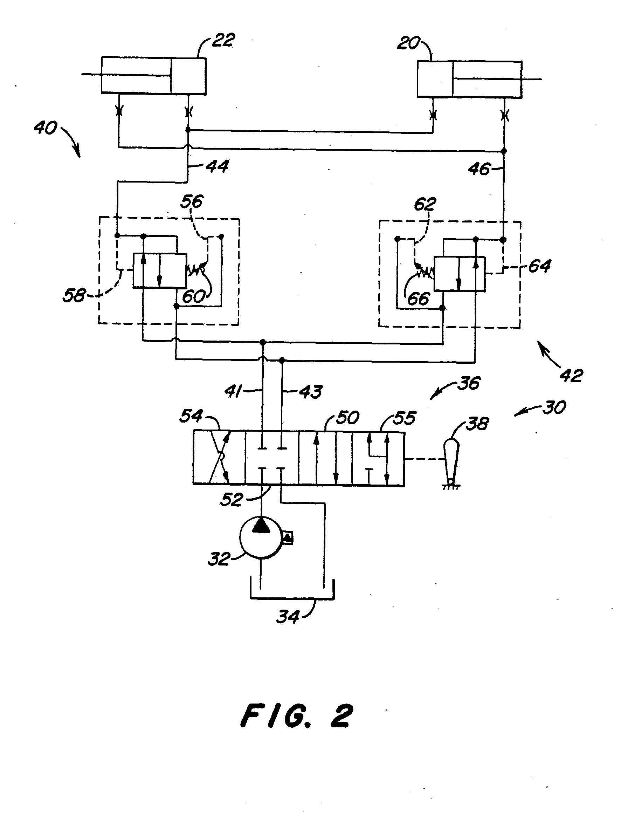

Wie aus Fig. 2 hervorgeht, sind die beiden Hydraulikzylinder 20 und 22 in einem hydraulischen Schaltkreis 30 integriert. Dieser weist eine Pumpe 32, einen Sammelbehälter 34 und ein als Vierwege-Vierstellungsventil ausgebildetes Steuerventil 36 auf, das beispielsweise über ein mechanisches Gestänge mit einem Stellhebel 38 wirkungsmäßig verbunden ist. In den Schaltkreis 30 sind ferner Drucksteuerventile 40 und 42 geschaltet, die beispielsweise Drucksteuerventile PPDB von Sun Hydraulics sein können. Leitungen 41 und 43 stellen eine Druckmittelverbindung zwischen dem Steuerventil 36 und den beiden Drucksteuerventilen 40 und 42 her. Das Drucksteuerventil 40 steuert den Druckmittelfluß zwischen den Leitungen 41 und 43 und über eine Leitung 44 mit den kolbenseitigen Enden der Hydraulikzylinder 20 und 22. Das Drucksteuerventil 42 steuert über die Leitungen 41 und 43 den Druckmittelfluß über eine Leitung 46 mit den kolbenstangenseitigen Enden der Hydraulikzylinder 20 und 22.

Das Steuerventil 36 kann auf eine Durchflußstellung 50, eine Schließstellung 52, eine Umkehrstellung 54 und eine Schwimmstellung 55 eingestellt werden. Das Drucksteuerventil 40 weist Pilotleitungen 56 und 58 auf und steht unter der Wirkung einer Feder 60, die das Drucksteuerventil 40 in die in Fig. 2 dargestellte Stellung verschieben will. Die Pilotleitungen 56 und 58 sind mit den Leitungen 43 und 44 verbunden.

Das Drucksteuerventil 42 weist ebenfalls Pilotleitungen 62 und 64 auf, die mit den Leitungen 41 und 46 verbunden sind, und wird über eine Feder 66 in die in Fig. 2 dargestellte Stellung gedrückt.

Wird das Steuerventil 36 in die Durchflußstellung 50 verschoben, so ist die Leitung 41 mit der Pumpe 32 und die Leitung 43 mit dem Sammelbehälter 34 verbunden. Das Drucksteuerventil 40 steht je nach Einstellung der Feder 60 unter einem Druck zwischen 0 und 49 bar (700 psi), der über die Leitung 44 auf die kolbenseitigen Enden der Hydraulikzylinder 20 und 22 wirkt. Zur gleichen Zeit wirkt der Pumpendruck auf die Pilotleitung 62 des Drucksteuerventils 42, während der Druck in der Pilotleitung 64 vom Sammelbehälterdruck beeinflußt wird. Befinden sich die Rahmenteile 16 und 18 in ihrer Arbeitsstellung und wird die Bewegung der Kolben der Hydraulikzylinder 20 und 22 gestoppt, so wird die bodenwärts gerichtete, durch die Rahmenteile 16, 18 hervorgerufene Kraft durch Einstellung der Feder 60 des Drucksteuerventils 40 gesteuert, wobei das Drucksteuerventil 40 einen Druck zwischen 0 und 49 bar am kolbenseitigen Ende der Hydraulikzylinder 20 und 22 zuläßt.

Nach Verstellen der Rahmenteile 16 und 18 in ihre Arbeitsstellung kann, wenn es erwünscht ist, die Abwärtsstellkraft reduziert werden, indem die kolbenstangenseitigen Enden der Hydraulikzylinder 20 und 22 mit Druckmittel beaufschlagt werden. In diesem Fall wird das Steuerventil 36 in seine Umkehrstellung 54 verschoben. Hierdurch wird die Leitung 43 mit Druckmittel versorgt und der Sammelbehälter 34 mit der Leitung 41 verbunden. Ist die Leitung 43 mit Druckmittel beaufschlagt, so bleibt das Drucksteuerventil 40 in der gezeigten Stellung, so daß die kolbenseitigen Enden der Hydraulikzylinder 20 und 22 mit dem Sammelbehälter 34 verbunden sind. Zur gleichen Zeit versorgt das Drucksteuerventil 42 die Leitung 46 mit Druckmittel und somit die kolbenstangenseitigen Enden der Hydraulikzylinder 20 und 22 bis zu einem Druck, der durch die Feder 66 bestimmt wird (0 bis 175 bar = 0 bis 2 500 psi).

Um die Rahmenteile 16 und 18 in eine angehobene bzw. Transportstellung zu verschwenken oder um die Kolbenstangen der Hydraulikzylinder 20 und 22 einzufahren, wird die Feder 66 des Drucksteuerventils 42 so verstellt, daß sich der maximale Druck in der Leitung 46 einstellen kann. Danach wird das Steuerventil 36 in seine Umkehrstellung 54 verstellt, in der das Drucksteuerventil 42 die Pumpe 32 mit den kolbenstangenseitigen Enden der Hydraulikzylinder 20 und 22 und das Drucksteuerventil 40 die kolbenseitigen Enden der Hydraulikzylinder 20 und 22 mit dem Sammelbehälter 34 verbindet. Somit können mittels des hydraulischen Schaltkreises 30 die Rahmenteile 16 und 18 angehoben bzw. abgesenkt werden, und der Druck in den kolbenseitigen und kolbenstangenseitigen Enden der Hydraulikzylinder 20 und 22 kann entsprechend eingestellt werden.

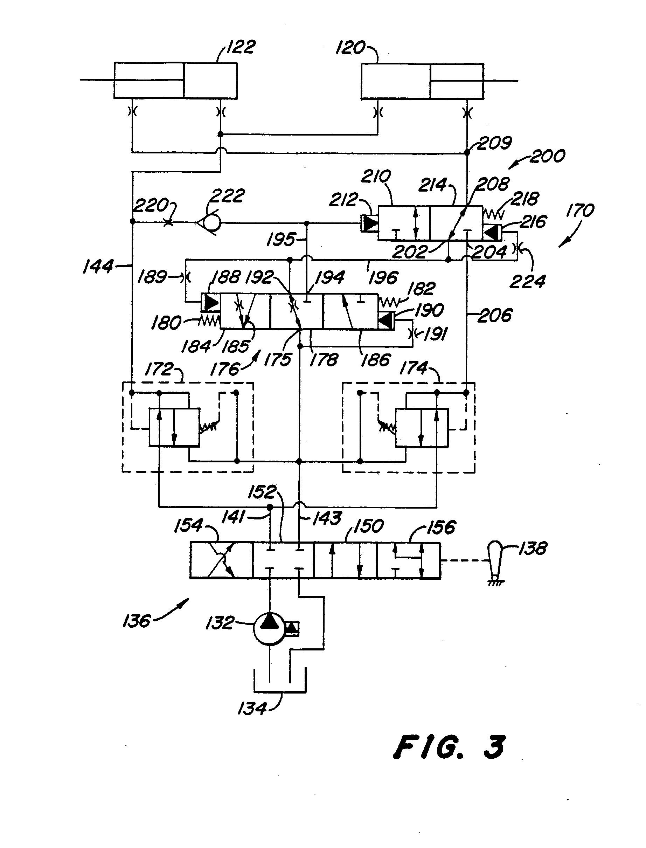

In Fig. 3 ist ein weiteres Ausführungsbeispiel eines hydraulischen Schaltkreises 170 dargestellt, der zur Steuerung von Hydraulikzylindern 120, 122 dient und eine pumpe 132, einen Sammelbehälter 134 und ein als Vierwege-Vierstellungsventil 136 ausgebildetes Steuerventil aufweist, das mechanisch gesteuert werden kann und über ein Gestänge mit einem Stellhebel 138 verbunden ist. Das Steuerventil 136 läßt sich zwischen einer Schließstellung 152, einer Durchflußstellung 150 zum Absenken der Rahmenteile 16 und 18, einer Umkehrstellung 154 zum Anheben der Rahmenteile und einer Schwimmstellung 156 verstellen. Der hydraulische Schaltkreis 170 weist außerdem zwei Drucksteuerventile 172, 174 auf, die beispielsweise Drucksteuerventile PPDB der Firma Sun Hydraulics sein können. Die Drucksteuerventile 172 und 174 sind über eine Leitung 141 mit dem Steuerventil 136 verbunden. Das Drucksteuerventil 172 wird vorzugsweise in der Montage so eingestellt, daß der maximale Druck in einer Leitung 144 an den kolbenseitigen Enden der Hydraulikzylinder 120 und 122 ca. 52 bar (750 psi) beträgt, wobei das Drucksteuerventil 174 durch die Bedienungsperson verstellbar sein kann, um an den kolbenstangenseitigen Enden einen gewünschten Druck zu erhalten. Beide Drucksteuerventile 172 und 174 sind über eine weitere Leitung 143 mit dem Steuerventil 136 verbunden.

Die Leitung 143 ist ferner mit einer Anschlußbohrung 175 eines Dreistellungsventils 176 verbunden, das federbeaufschlagt ist und hierzu endseitig je eine Feder 180 und 182 aufweist, die das Dreistellungsventil in einer Mittenstellung 178 halten. Über den Druck in Piloträumen 188 und 190 läßt sich das Dreistellungsventil 176 in je eine Endstellung 184 und 186 verstellen. Das Dreistellungsventil 176 ist ferner mit Anschlußbohrungen 192 und 194 ausgestattet, wobei die Anschlußbohrung 192 über eine Drossel 189 an den Pilotraum 188 und über eine Leitung 196 an ein Zweigeventil 200 angeschlossen ist. Der Pilotraum 190 ist über eine Drossel 191 mit der Leitung 143 verbunden. Die Anschlußbohrung 194 ist mit einer Leitung 195 verbunden.

Das Zweiwegeventil 200 ist mit einer Anschlußbohrung 202 ausgerüstet, an die die Leitung 196 angeschlossen ist. Eine weitere Anschlußbohrung 204 des Zweiwegeventils 200 ist über eine Leitung 206 mit dem Drucksteuerventil 174 verbunden, während eine Anschlußbohrung 208 des Zweiwegeventils 200 über eine Leitung 209 mit den kolbenstangenseitigen Enden der Hydraulikzylinder 120 und 122 verbunden ist. Das Zweiwegeventil 200 wird mittels des Druckes in einem Pilotraum 212 in eine Stellung 210 und mittels des Druckes in einem Pilotraum 216 und des Druckes einer Feder 218 in eine Stellung 214 verstellt. Der Pilotraum 212 ist an die Anschlußbohrung 194 des Dreistellungsventils 176 angeschlossen und über eine Drossel 220 und ein Rückschlagventil 222 an die Leitung 144. Der Pilotraum 216 ist über eine Drossel 224 an die Leitung 196 angeschlossen.

**Arbeitsweise der Ausführung nach Fig. 3**

Geht man beispielsweise davon aus, daß die Kolben der Hydraulikzylinder 120 und 122 eingefahren sind und die Rahmenteile 16 und 18 sich in ihrer angehobenen Transportstellung befinden, können die Kolben durch Verstellen des Steuerventils 136 in die Durchflußstellung 150 wieder ausgefahren werden, wobei Druckmittel von der Pumpe 132 zu den kolbenseitigen Enden der Hydraulikzylinder 120 und 122 über die Leitung 141, das Drucksteuerventil 172 und die Leitung 144 fließt. Die Kolben der Hydraulikzylinder 120 und 122 werden hierdurch ausgefahren, und Druckmittel fließt von den kolbenstangenseitigen Enden über die Leitung 209, das Zweiwegeventil 200 (Stellung 214), das Dreistellungsventil 176 (Stellung 178), die Leitung 143 und das Steuerventil 136 zum Sammelbehälter 134. Hierbei entsteht ein Druckdifferential zwischen den Anschlußbohrungen 192 und 175 des Dreistellungsventils 176, so daß das Dreistellungsventil 176 in die Endstellung 184 verstellt wird, in der sein Anschluß 185 Druckmittel aus der Leitung 195 zum Sammelbehälter 134 leitet. Hierdurch verbleibt ein kleiner Druck im Pilotraum 212, so daß das Zweiwegeventil 200 in seiner Stellung 214 verbleibt. Die Drossel 220 ist so klein, daß kein Druckmittel an den Hydraulikzylindern 120 und 122 vorbeifließen kann.

Der Rückfluß des Druckmittels von den kolbenstangenseitigen Enden zum Sammelbehälter 134 umgeht damit das Drucksteuerventil 174, das daher auf jeden gewünschten Wert eingestellt werden kann, wobei der in der Leitung 206 dadurch herrschende Druck durch das Zweiwegeventil 200 blockiert wird, so daß dieser Druck die Kräfte nicht herabsetzt, die zum Ausfahren der Kolben der Hydraulikzylinder notwendig sind, wenn das Steuerventil 136 anfänglich in die Durchflußstellung 150 verstellt worden ist. Das Rückschlagventil 222 verhindert, daß Druckmittel von den kolbenstangenseitigen Enden zu den kolbenseitigen Enden der Hydraulikzylinder 120, 122 fließt, wenn das Steuerventil 136 in seine Schließstellung 152 verstellt worden ist, bevor die Kolben vollständig ausgefahren sind, so daß die Rahmenteile auch in einer Stellung festgesetzt werden können, in der sie nicht vollständig abgesenkt sind.

Wenn die Rahmenteile 16 und 18 sich in ihrer Arbeitsstellung befinden und die Bewegung der Kolben der Hydraulikzylinder 120 und 122 gestoppt wird, hört der Druckmittelfluß über das Dreistellungsventil 176 auf, so daß der Differenzdruck zwischen den Anschlußbohrungen 192 und 175 aufgehoben wird und das Dreistellungsventil 176 zurück in seine Mittenstellung 178 verschoben wird, in der die Leitung 195 blockiert ist. Nun wird der volle Druck von 52 bar (750 psi) aus der Leitung 144 zum Pilotraum 212 geführt und das Zweiwegeventil 200 in die Stellung 210 gebracht, in der die kolbenstangenseitigen Enden der Hydraulikzylinder 120 und 122 über die Anschlußbohrung 208, die Anschlußbohrung 204 und die Leitung 206 mit dem Drucksteuerventil 174 verbunden sind. An dieser Stelle wird die abwärts bzw. aufwärts gerichtete Kraft der Rahmenteile 16 und 18 automatisch entsprechend der Stellung der Feder des Drucksteuerventils 174 eingestellt.

Um die Kolben der Hydraulikzylinder 120 und 122 einzufahren und dabei die Rahmenteile 16 und 18 zusammenzulegen bzw. in ihre Transportstellung zu verschwenken, wird das Steuerventil 136 in die Umkehrstellung 154 verstellt, wodurch in der Leitung 143 und in dem Pilotraum 190 ein Druck aufgebaut wird. Hierdurch werden die Drucksteuerventile 172 und 174 in die gezeigte Stellung verstellt. Ferner wird auch das Dreistellungsventil 176 in die Endstellung 186 und das Zweiwegeventil 200 in die Stellung 214 verstellt, so daß Druckmittel von der Pumpe 132 über das Steuerventil 136, die Leitung 143, das Dreistellungsventil 176, die Leitung 196, das Zweiwegeventil 200 und die Leitung 209 zu den kolbenstangenseitigen Enden der Hydraulikzylinder 120 und 122 bei Umgehung des Drucksteuerventils 174 fließt, so daß der volle Pumpendruck zur Verstellung der Rahmenteile 16, 18 in ihre Transportstellung zur Verfügung steht. Zur gleichen Zeit fließt Druckmittel von den kolbenseitigen Enden der Hydraulikzylinder 120 und 122 über die Leitung 144, das Drucksteuerventil 172, die Leitung 141 und das Steuerventil 136 zum Sammelbehälter 134.

Das Drucksteuerventil 174, das den Druck an den kolbenstangenseitigen Enden der Hydraulikzylinder 120 und 122 bestimmt, kann daher auf jeden gewünschten Druck eingestellt werden, und während der Schwenkbewegung der Rahmenteile 16 und 18 von ihrer Arbeitsstellung in ihre Transportstellung bzw. umgekehrt bewirkt dieser zuvor eingestellte Druck keine Herabsetzung der Kräfte, die zum Ein- bzw. Ausfahren der Kolben der Hydraulikzylinder führen. Befinden sich jedoch die Rahmenteile 16 und 18 in ihrer Arbeitsstellung und werden die Kolben der Hydraulikzylinder nicht weiter verstellt, so wird der zuvor eingestellte Druck automatisch auf die kolbenstangenseitigen Enden geführt, um dem Druck an den kolbenseitigen Enden entgegenzuwirken, der durch die Einstellung des Drucksteuerventils 172 hervorgerufen wird, so daß für die Rahmenteile die gewünschte Stellkraft oder Gewichtsausgleichskraft erzeugt werden kann.

In der Schließstellung 152 des Steuerventils 136 sind beide Leitungen 141 und 143 blockiert. Das Zweiwegeventil 200 in der Stellung 214 verbindet die Leitung 209 mit der blockierten Leitung 143. Das Drucksteuerventil 172 in der gezeigten Stellung verbindet die Leitung 144 mit der blockierten Leitung 141. Hierdurch wird der Druckmittelfluß in den Leitungen 144 und 209 blockiert, und die Hydraulikzylinder 120 und 122 sind festgesetzt. Diese Schließstellung 152 ist notwendig, um während der Auf- und Abwärtsbewegung der Rahmenteile 16 und 18 einen Stillstand zu ermöglichen, um zu verhindern, daß ein Rahmenteil mit einem Hindernis in Berührung gerät.

In der Schwimmstellung 156 des Steuerventils 136 sind die beiden Leitungen 141 und 143 mit dem Sammelbehälter 134 verbunden. Die Ventile 172, 176 und 200 nehmen die gleiche Stellung wie in der Schließstellung ein, so daß die Leitungen 144 und 209 untereinander und auch mit dem Sammelbehälter 134 in Verbindung stehen. Hierdurch wird eine freie Bewegung der Kolben der Hydraulikzylinder 120 und 122 gewährleistet. Eine derartige Bewegung der Rahmenteile bzw. der Kolben der Hydraulikzylinder ist vorteilhaft, insbesondere bei Fehlfunktionen im System oder wenn die Scheiben des Bodenbearbeitungsgerätes in einem Boden arbeiten, bei dem kein Gewichtsausgleich notwendig ist.

Die Ausbalancierung der beschriebenen Stellkräfte für die Scheibenegge gemäß der vorliegenden Erfindung läßt sich auch bei anderen landwirtschaftlich nutzbaren Geräten einsetzen. Eine derartige Gewichtsausgleichung kann auch bei einem mit Bezug auf die Fahrtrichtung vorderen und hinteren Teil eines Rahmenteiles einer Scheibenegge vorgenommen werden. Eine derartige Niveauregelung ist wichtig, um eine gleichmäßige Bodendurchdringung und Zerkrümelung zu erreichen und auch über die gesamte Breite der Maschine eine gleichmäßige Nivellierung zu gewährleisten. Bei einigen bekannten Nivellierungssystemen werden mechanische Gestänge eingesetzt, um eine Steuerung der vorderen und hinteren Teile der Maschine zur Bodennivellierung durchzuführen. Derartige Gestänge werden dazu benutzt, um mit Bezug auf die Lage der Kupplungsvorrichtung gegenüber dem Hauptrahmen den Druck der Nivellierungsfeder zu steuern, so daß bei nachlassender Federspannung der vordere Teil des Bodenbearbeitungsgerätes tiefer in den Boden eindringen kann als bei zusammengedrückter Feder, die dann dafür sorgt, daß das Bodenbearbeitungsgerät entsprechend aus dem Boden herausbewegt wird. Der gleiche Effekt kann auch dann erreicht werden, wenn die Gestängeanordnung entfernt wird und ein Hydraulikzylinder zwischen der Kupplungsvorrichtung und dem Hauptrahmen installiert wird und das erfindungsgemäße Nivellierungsoder Ausgleichssystem zur Steuerung der Hydraulikzylinder eingebaut wird. Mit dem erfindungsgemäßen System wird auf einfache Weise eine gleichmäßige Steuerung der Bodentiefe des vorderen und hinteren Teils der Maschine erreicht, unabhängig von der Lage der Kupplung gegenüber dem Hauptrahmen und unabhängig davon, ob die Scheibenegge über kleine Bodenunebenheiten bzw. andere Dinge sich hinwegbewegt.

Ein anderer Anwendungsfall ist die Steuerung der nach unten gerichteten Kraft von Sä- bzw. Pflanzvorrichtungen. Bei gegenwärtigen Serienpflanzvorrichtungen werden Zugfedern eingesetzt, um die nach unten gerichtete Kraft zu vergrößern und zu gewährleisten, daß die Sä- bzw. Pflanzvorrichtung im Boden bleibt. Eine derartige Kraft ist nicht konstant und ändert sich natürlich, wenn sich die Pflanz- bzw. Sävorrichtung auf- bzw. abwärtsbewegt. Das erfindungsgemäße Ausgleichssystem wird in einem derartigen Fall mit den Hydraulikzylindern verbunden, die an die Stelle der Federn treten, um somit eine konstante Kraft auf die Sä- bzw. Pflanzvorrichtung auszuüben. Ein derartiges System läßt sich darüber hinaus ferner einstellen, um den unterschiedlichen Bodenverhältnissen angepaßt werden zu können.

Ein derartiges Ausgleichsystem läßt sich auch bei allen anderen Geräten einsetzen, bei denen ähnlich wie bei dem beschriebenen Bodenbearbeitungsgerät eine entsprechende Anpassung des Gerätes an eine Bodenoberfläche angestrebt wird.

**Patentansprüche**

1. Arbeitsgerät, insbesondere Bodenbearbeitungsgerät (10), mit einem ersten Rahmenteil (14) und mindestens einem zweiten Rahmenteil (16, 18), die über einen an beiden Rahmenteilen (14, 16, 18) angreifenden, doppelseitig beaufschlagbaren Hydraulikzylinder (20, 22 bzw. 120, 122) mit zwei Druckräumen derart verschwenkbar sind, daß der zweite Rahmenteil (16, 18) bei Beaufschlagung des ersten Druckraumes in eine Arbeitsstellung und bei Beaufschlagung des zweiten Druckraumes in eine Transportstellung verstellbar ist, wozu der erste und zweite Druckraum über je eine Leitung an ein Steuerventil (36 bzw. 136) angeschlossen sind, über das der erste Druckraum mit einer Pumpe (32 bzw. 132) und der zweite Druckraum mit einem Sammelbehälter (34 bzw. 134) oder der zweite Druckraum mit der Pumpe (32 bzw. 132) und der erste Druckraum mit dem Sammelbehälter (34 bzw. 134) verbindbar sind, dadurch gekennzeichnet daß in wenigstens einer zu einem Druckraum führenden Leitung ein erstes Drucksteuerventil (42 bzw. 174) vorgesehen und dieser Druckraum in der Arbeitsstellung des zweiten Rahmenteils (16, 18) von der Pumpe (32 bzw. 132) mit einem reduzierten Druck beaufschlagbar ist.

2. Arbeitsgerät nach Anspruch 1, dadurch gekennzeichnet, daß in der zu dem anderen Druckraum des Hydraulikzylinders (20, 22 bzw. 120, 122) führenden Leitung (41 bzw. 141) ein zweites Drucksteuerventil (40 bzw. 172) vorgesehen ist, über das dieser Druckraum in der Arbeitsstellung des zweiten Rahmenteils (16, 18) von der Pumpe (32 bzw. 132) mit einem reduzierten Druck beaufschlagbar ist.

3. Arbeitsgerät nach Anspruch 1 oder 2, dadurch gekennzeichnet, daß das Drucksteuerventil (42 bzw. 174 oder 40 bzw. 172) manuell einstellbar und als Druckreduzierventil ausgebildet ist.

4. Arbeitsgerät nach Anspruch 1, dadurch gekennzeichnet, daß das erste Drucksteuerventil (42 bzw. 174) überbrückbar ist.

5. Arbeitsgerät nach Anspruch 3, dadurch gekennzeichnet, daß das Drucksteuerventil (42 bzw. 174 oder 40 bzw. 172) als Überdruckventil ausgebildet ist.

6. Arbeitsgerät nach Anspruch 4, dadurch gekennzeichnet, daß in der zu dem zweiten Druckraum des Hydraulikzylinders (120, 122) führenden Leitung ein Zweiwegeventil (200) vorgesehen ist, das aus seiner das erste Drucksteuerventil (174) mit dem zweiten Druckraum verbindenden Stellung (210) in eine zweite Stellung (214) verstellbar ist, in der die Verbindung vom ersten Drucksteuerventil (174) zum zweiten Druckraum unterbrochen und in der der zweite Druckraum über eine Bypassleitung an das Steuerventil (136) angeschlossen ist, über das die Bypassleitung wahlweise an die Pumpe (132) oder an den Sammelbehälter (134) anschließbar ist, wobei das erste Drucksteuerventil (174) an die zum ersten Druckraum führende Leitung (141) angeschlossen ist.

7. Arbeitsgerät nach Anspruch 6, dadurch gekennzeichnet, daß das Zweiwegeventil (200) an seinen Enden je einen Pilotraum (212 und 216) aufweist und unter der Wirkung einer Feder (218) steht, die bestrebt ist, das Zweiwegeventil (200) in seine zweite Stellung (214) zu verstellen, wobei die Bypassleitung an den Pilotraum (216) mit der Feder (218) und der andere Pilotraum (212) an die zum ersten Druckraum führende Leitung (141) angeschlossen ist.

8. Arbeitsgerät nach einem oder mehreren der vorherigen Ansprüche, dadurch gekennzeichnet, daß in der Bypassleitung ein Dreistellungsventil (176) vorgesehen ist, das beidenends unter der Wirkung je einer Feder (180, 182) steht und dort Piloträume (188, 190) aufweist, wobei ein Pilotraum stromabwärts des Dreistellungsventils (176) und der andere Pilotraum (190) stromaufwärts des Dreistellungsventils (176) an die Bypassleitung angeschlossen ist und das Dreistellungsventil (176) aus einer Mittenstellung (178), in der der Durchfluß gedrosselt ist, in eine erste Endstellung (186), in der der Durchfluß ungedrosselt ist, oder in die andere Endstellung (184) verstellbar ist, in der ein gedrosselter Durchfluß möglich ist und zusätzlich ein Anschluß (185) der Verbindung des einen Pilotraums (212) des Zweiwegeventils (200) an die zum ersten Druckraum führende Leitung an die Bypassleitung gegeben ist, der in der Mittenstellung und in der ersten Endstellung des Dreistellungsventils (176) unterbrochen ist.

9. Arbeitsgerät nach einem oder mehreren der vorherigen Ansprüche, dadurch gekennzeichnet, daß in der Verbindung des einen Pilotraumes (212) des Zweiwegeventils (200) an die zum ersten Druckraum führende Leitung (141) eine Drossel (220) und ein Rückschlagventil (222) vorgesehen sind, das einen Druckmittelfluß von der zum ersten Druckraum führenden Leitung (141) zum Pilotraum (212) gestattet und in umgekehrter Richtung verhindert.

10. Arbeitsgerät nach einem oder mehreren der vorherigen Ansprüche, dadurch gekennzeichnet, daß jedes Drucksteuerventil (40, 42, 172, 174) aus seiner einen Endstellung, in der der Zu- und Rückfluß in bzw. aus dem entsprechenden Druckraum möglich ist, in eine zweite Endstellung entgegen der Wirkung einer Feder (60, 66) verstellbar ist, in der der entsprechende Druckraum mit dem Sammelbehälter verbunden ist.

11. Arbeitsgerät nach einem oder mehreren der vorherigen Ansprüche, dadurch gekennzeichnet, daß die maximal einstellbaren Werte der Drucksteuerventile (40, 42, 172, 174) unterschiedlich sind.

## Revendications

1. Outil de travail, en particulier outil de travail du sol (10), comportant une première partie de bâti (14) et au moins une seconde partie de bâti (16, 18), qui peuvent pivoter grâce à un vérin hydraulique (20, 22, respectivement 120, 122) à double effet, appliqué aux deux parties de bâti (14, 16, 18), comportant deux chambres de pression, de telle façon que la seconde partie de bâti (16, 18) peut passer, lorsque c'est la première chambre de pression qui est sollicitée, dans une position de travail et, lorsque c'est la seconde chambre de pression qui est sollicitée, dans une position de transport, ce pour quoi la première chambre de pression et la seconde sont raccordées chacune par une conduite à une soupape de commande (36, respectivement 136), au moyen de laquelle la première chambre de pression peut-être reliée à une pompe (32, respectivement 132) et la seconde chambre de pression à un réservoir collecteur (34, respectivement 134) ou la seconde chambre de pression à la pompe (32, respectivement 132) et la première chambre de pression au réservoir collecteur (34, respectivement 134), caractérisé en ce que, dans au moins une conduite aboutissant à une chambre de pression, il est prévu une première soupape de commande de pression (42, respectivement 174) et cette chambre de pression peut recevoir l'application d'une pression réduite de la part de la pompe (32, respectivement 132), dans la position de travail de la seconde partie de bâti (16, 18).

2. Outil de travail selon la revendication 1, caractérisé en ce qu'il est prévu dans la conduite (41, respectivement 141) aboutissant à l'autre chambre de pression du vérin hydraulique (20, 22, respectivement 120, 122), une seconde soupape de commande de pression (40, respectivement 172), au moyen de laquelle cette chambre de pression peut recevoir de la part de la pompe (32, respectivement 132), une pression réduite dans la position de travail de la seconde partie de bâti (16, 18).

3. Outil de travail selon la revendication 1 ou 2, caractérisé en ce que la soupape de commande de pression (42, respectivement 174 ou 40, respectivement 172) est réglable manuellement et réalisée sous la forme d'une soupape de réduction de pression.

4. Outil de travail selon la revendication 1, caractérisé en ce que la première soupape de commande de pression (42, respectivement 174) peut-être shuntée.

5. Outil de travail selon la revendication 3, caractérisé en ce que la soupape de commande de pression (42, respectivement 174 ou 40, respectivement 172) est réalisée sous la forme d'une soupape de surpression.

6. Outil de travail selon la revendication 4, caractérisé en ce que, dans la conduite aboutissant à la seconde chambre de pression du vérin hydraulique (120, 122) est prévue une soupape à deux voies (200) qui peut passer de sa position (210) reliant la première soupape de commande de pression (174) à la seconde chambre de pression dans une seconde position (214) dans laquelle la liaison entre la première soupape de commande de pression (174) et la seconde chambre de pression est interrompue, et dans laquelle la seconde chambre de pression est reliée par l'intermédiaire d'une conduite de dérivation à la soupape de commande (136) au moyen de laquelle la conduite de dérivation peut-être reliée à volonté à la pompe (132) ou au réservoir collecteur (134), la première soupape de commande de pression (174) étant reliée à la conduite (141) aboutissant à la première chambre de pression.

7. Outil de travail selon la revendication 6, caractérisé en ce que la soupape à deux voies (200) comporte à chaque extrémité une chambre pilote (respectivement 212 et 216) et est soumise à l'action d'un ressort qui tend à faire passer la soupape à deux voies (200) dans sa seconde position (214), la conduite de dérivation étant raccordée à la chambre-pilote (216) avec le ressort (218) et l'autre chambre-pilote (212) à la conduite (141) aboutissant à la première chambre de pression.

8. Outil de travail selon une ou plusieurs des revendications précédentes, caractérisé en ce qu'il est prévu dans la conduite de dérivation une soupape à trois positions (176) qui est soumise à chacune de ses deux extrémités à l'action d'un ressort respectif (180, 182) et y comporte des chambres-pilotes (188, 190), une chambre pilote étant reliée en aval de la soupape à trois positions (176) et l'autre chambre-pilote (190) en amont de la soupape à trois positions (176) à la conduite de dérivation et la soupape à trois positions (176) pouvant passer d'une position centrale (178) dans laquelle le débit est étranglé à une première position extrême (186) dans laquelle le débit n'est pas étranglé, ou à l'autre position extrême (184) dans laquelle un débit étranglé est possible, et dans laquelle il existe en plus un raccord (185) de la liaison de la première chambre-pilote (212) de la soupape à deux voies (200) avec la conduite aboutissant à la première chambre de pression à la conduite de dérivation, lequel est interrompu dans la position centrale et dans la première position extrême de la soupape à trois positions (176).

9. Outil de travail selon une ou plusieurs des revendications précédentes, caractérisé en ce qu'on prévoit dans la liaison de la première chambre-pilote (212) de la soupape à deux voies (200) avec la conduite (141) aboutissant à la première chambre de pression un étranglement (220) et une soupape de retenue (222) qui permet un écoulement de fluide sous pression de la conduite (141) aboutissant à la première chambre de pression à la chambre-pilote (212), et l'empêche en sens inverse.

10. Outil de travail selon une ou plusieurs des revendications précédentes, caractérisé en ce chaque soupape de commande de pression (40, 42, 172, 174) peut passer de sa première position extrême dans laquelle l'afflux et le reflux dans la chambre de pression correspondante et de celle-ci sont possibles, contre l'action d'un ressort (60, 66), dans une seconde position dans laquelle la chambre de pression correspondante est reliée au réservoir-collecteur.

11. Outil de travail selon une ou plusieurs des revendications précédentes, caractérisé en ce que les valeurs de réglage maximum des soupapes de commande de pression (40, 42, 172, 174) sont différentes.

**Claims**

1. Implement, especially ground-working implement (10), with a first frame part (14) and at least one second frame part (16, 18), which are capable of being pivoted by a double-acting hydraulic cylinder (20, 22 or 120, 122) with two pressure chambers and engaging with both frame parts (14, 16, 18), so that the second frame part (16,18) is adjustable into a working position on activating the first pressure chamber and into a transport position on activating the second pressure chamber, the first and second pressure chambers each being connected for this by a line to a control valve (36 or 136), through which the first pressure chamber can be connected to a pump (32 or 132) and the second pressure chamber to a reservoir (34 or 134) or the second pressure chamber to the pump (32 or 132) and the first pressure chamber to the reservoir (34 or 134), characterized in that a first pressure control valve (42 or 174) is provided in at least one line leading to a pressure chamber and this pressure chamber can be activated by the pump (32 or 132) with a reduced pressure in the working position of the second frame part (16, 18).

2. Implement according to claim 1, characterized in that a second pressure control valve (40 or 172) is provided in the line (41 or 141) leading to the other pressure chamber of the hydraulic cylinder (20, 22 or 120, 122), through which this pressure chamber can be activated with a reduced pressure in the working position of the second frame part (16, 18).

3. Implement according to claim 1 or 2, characterized in that the pressure control valve (42 or 174 respectively or 40 or 172 respectively) is manually adjustable and is formed as a pressure reducing valve.

4. Implement according to claim 1, characterized in that the first pressure control valve (42 or 174) can be bypassed.

5. Implement according to claim 3, characterized in that the pressure control valve (42 or 174 respectively or 40 or 172 respectively) is formed as a pressure relief valve.

6. Implement according to claim 4, characterized in that a two-way valve (200) is provided in the line leading to the second pressure chamber of the hydraulic cylinder (120, 122), which valve can be adjusted from its position. connecting the first pressure control valve (174) to the second pressure chamber into a second position, in which the connection of the first pressure control valve (174) to the second pressure chamber is interrupted and in which the second pressure chamber is connected through a bypass line to the control valve (136), through which the bypass line is selectively connectible to the pump (132) or to the reservoir (134), the first pressure control valve (174) being connected to the line (141) leading to the first pressure chamber.

7. Implement according to claim 6, characterized in that the two-way valve (200) has a pilot chamber (212 and 216) at each of its ends and is biased by the action of a spring (218) urging the two-way valve (200) into its second position (214), the bypass line being connected to the pilot chamber (216) with the spring (218) and the other pilot chamber being connected to the line (141) leading to the first pressure chamber.

8. Implement according to one or more of the preceding claims, characterized in that a three-position valve (176) is provided in the bypass line, which valve is subject to the action of a spring (180, 182) at each of its two ends and there has pilot chambers (188, 190), one pilot chamber being connected to the bypass line downstream of the three-position valve (176) and the other pilot chamber (190) being connected to the bypass line upstream of the three position valve (176), and the three-position valve (176) being adjustable out of a middle position (178), in which the flow therethrough is throttled, into a first end position (186) in which the flow is unthrottled, or into the other end position (184), in which a throttled through-flow is possible and additionally there is provided communication (185) to the bypass line from the connection of the one pilot chamber (212) of the two-way valve (200) to the line leading to the first pressure chamber, which communication is interrupted in the middle position and in the first end position of the three position valve (176).

9. Implement according to one or more of the preceding claims, characterized in that a throttle (220) and a non-return valve (222) are provided in the connection of the one pilot chamber (212) of the two-way valve (200) to the line (141) leading to the first pressure chamber, the non-return valve permitting flow of pressure medium from the line (141) leading to the first pressure chamber to the pilot chamber (212) and preventing flow in the reverse direction.

10. Implement according to one or more of the preceding claims, characterized in that each pressure control valve (40, 42, 172, 174) is adjustable against the action of a spring (60, 66) from its one end position, in which the flow into and the return flow from the corresponding pressure chamber are possible, into a second end position, in which the corresponding pressure chamber is connected to the reservoir.

11. Implement according to one or more of the preceding claims, characterized in that the maximum adjustable values of the pressure control valves (40, 42, 172, 174) are different.

FIG. 1

# FIG. 2

FIG. 3